(19) Europäisches Patentamt
European Patent Office
Office européen des brevets

(11) EP 1 289 759 B1

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(21) Anmeldenummer: **01943387.9**

(22) Anmeldetag: **17.05.2001**

(51) Int Cl.[7]: **B32B 27/36**

(86) Internationale Anmeldenummer:
**PCT/EP01/05608**

(87) Internationale Veröffentlichungsnummer:
**WO 0109/2012 (06.12.2001 Gazette 2001/49)**

(54) **WEISSE, HOCHGLÄNZENDE, POLYESTERFOLIE ENTHALTEND CYCLOOLEFINCOPOLYMER (COC), VERFAHREN ZU IHRER HERSTELLUNG UND IHRE VERWENDUNG**

WHITE, HIGH-GLOSS, POLYESTER FILM CONTAINING CYCLO-OLEFIN COPOLYMERS (COC), A METHOD FOR THE PRODUCTION THEREOF AND THE USE OF THE SAME

FEUILLE POLYESTER BLANCHE ULTRA-BRILLANTE CONTENANT UN CYCLO-OLEFINE POLYMERE (COC), PROCEDE DE FABRICATION ET UTILISATION DE CETTE FEUILLE

(84) Benannte Vertragsstaaten:
**DE FR GB IT LU NL**

(30) Priorität: **26.05.2000 DE 10026177**

(43) Veröffentlichungstag der Anmeldung:
**12.03.2003 Patentblatt 2003/11**

(73) Patentinhaber: **Mitsubishi Polyester Film GmbH
65203 Wiesbaden (DE)**

(72) Erfinder:
- **MURSCHALL, Ursula
55283 Nierstein (DE)**
- **BENNETT, Cynthia
55232 Alzey (DE)**
- **KERN, Ulrich
55218 Ingelheim (DE)**
- **PEIFFER, Herbert
55126 Mainz (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**EP-A- 0 786 495** **EP-A- 1 068 949**
**DE-A- 19 540 277**

- **PATENT ABSTRACTS OF JAPAN vol. 017, no. 274 (C-1064), 27. Mai 1993 (1993-05-27) & JP 05 009319 A (UNITIKA LTD), 19. Januar 1993 (1993-01-19)**

EP 1 289 759 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine weiße, hochglänzende, biaxial orientierte, koextrudierte Polyesterfolie, die aus mindestens einer Basisschicht und mindestens einer Deckschicht besteht, wobei die Basisschicht einen Polyesterrohstoff und ein Cycloolefincopolymer (COC) enthält. Die Erfindung betrifft femer ein Verfahren zur Herstellung der Polyesterfolie sowie ihre Verwendung.

Weiße, biaxial orientierte Polyesterfolien sind nach dem Stand der Technik bekannt.

In der DE-A 2 353 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters und 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr eingesetzt werden kann, da ansonsten die Folie verfärbt bzw. gelb wird. Das Verfahren ist damit unwirtschaftlich. Außerdem weist die Folie hohe Rauigkeiten auf und hat damit ein sehr mattes Aussehen (sehr niedriger Glanz), was für viele Anwendungszwecke unerwünscht ist.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, dass die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig ist auch hier, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb verfärbt wird. Das Verfahren ist damit aber unwirtschaftlich. Außerdem weist die Folie hohe Rauigkeiten auf und hat damit ein sehr mattes Aussehen (sehr niedriger Glanz), was für viele Anwendungszwecke unerwünscht ist.

In der EP-A 0 360 201 wird eine zumindest zweischichtige Polyesterfolie beschrieben, die eine Basisschicht mit feinen Vakuolen aufweist, deren Dichte zwischen 0,4 und 1,3 $kg/dm^3$ liegt und mindestens eine Deckschicht aufweist, deren Dichte größer als 1,3 $kg/dm^3$ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauigkeit der laminierten Oberfläche kann verringert werden. Nachteilig ist auch hier, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb verfärbt wird. Das Verfahren ist damit unwirtschaftlich. Außerdem weisen die in den Beispielen aufgeführten Folien hohe Rauigkeiten auf und haben damit ein mattes Aussehen (niedriger Glanz), was für viele Anwendungszwecke unerwünscht ist.

In der EP-A 0 795 399 wird eine zumindest zweischichtige Polyesterfolie beschrieben, die eine Basisschicht mit feinen Vakuolen aufweist, deren Dichte zwischen 0,4 und 1,3 $kg/dm^3$ liegt, und mindestens eine Deckschicht aufweist, deren Dichte größer als 1,3 $kg/dm^3$ beträgt. Die Vakuolen werden durch Zugabe von 5 bis 45 Gew.-% eines thermoplastischen Polymers zum Polyesterrohstoff der Basisschicht und anschließende biaxiale Streckung der Folie erzeugt. Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordemisse. Nachteilig ist jedoch auch hier, dass das bei der Herstellung der Folie anfallende Regenerat (im Wesentlichen ein Gemisch aus Polyesterrohstoff und dem additiven Rohstoff) nicht mehr eingesetzt werden kann, da ansonsten die Folie undefiniert in der Farbe verändert wird, was für viele Anwendungen unerwünscht ist. Das Verfahren ist damit aber unwirtschaftlich. Außerdem weisen die in den Beispielen aufgeführten Folien hohe Rauigkeiten auf und haben damit ein mattes Aussehen (niedriger Glanz), was für viele Anwendungszwecke unerwünscht ist.

In der DE-A 195 40 277 wird eine ein- oder mehrschichtige Polyesterfolie beschrieben, die eine Basisschicht mit feinen Vakuolen aufweist, deren Dichte zwischen 0,6 und 1,3 $kg/dm^3$ liegt, und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff der Basisschicht und anschließende biaxiale Streckung der Folie erzeugt. Als thermoplastische Harze werden u.a. Polypropylen, Polyethylen, Polymethyl-Penten, cyclische Olefin-Polymere, Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine gute Reißfestigkeit und gute Isotropieeigenschaften aus. Nachteilig bleibt, dass das bei der Herstellung der

Folie anfallende Regenerat nicht mehr eingesetzt werden kann, da ansonsten die Folie undefiniert in der Farbe verändert wird, was für viele Anwendungen unerwünscht ist Das Verfahren ist damit aber unwirtschaftlich. Außerdem weisen die in den Beispielen aufgeführten Folien hohe Rauigkeiten auf und haben damit ein mattes Aussehen (niedriger Glanz), was für viele Anwendungszwecke unerwünscht ist.

Die Aufgabe der vorliegenden Erfindung bestand daher darin, eine weiße Polyesterfolie bereitzustellen, die sich insbesondere durch einen sehr hohen Glanz und durch eine verbesserte Herstellbarkeit, d.h. geringe Herstellkosten, auszeichnet, ohne dabei die oben genannten nachteiligen Eigenschaften aufzuweisen. Insbesondere sollte gewährleistet sein, dass das bei dem Herstellprozeß immanent anfallende Regenerat in einer Konzentration von bevorzugt 10 bis 70 Gew.-%, bezogen auf das Gesamtgewicht der Folie, wieder verwendet werden kann, ohne dass dabei die physikalischen Eigenschaften der Folie nennenswert negativ beeinflusst werden. Insbesondere sollte durch die Regeneratzugabe keine nennenswerte Verfärbung bzw. Gelbfärbung der Folie auftreten.

Die Aufgabe wird gelöst durch eine weiße, hochglänzende, biaxial orientierte, koextrudierte Polyesterfolie im Dickenbereich von bevorzugt 4 bis 500 µm bestehend aus mindestens einer Basisschicht und mindestens einer Deckschicht, wobei die Basisschicht zusätzlich ein Cycloolefincopolymeres (COC) enthält. Die Konzentration des COC beträgt bevorzugt von 2 bis 60 Gew.-%, bezogen auf das Gewicht der Basisschicht. Die Glasübergangstemperatur des Cycloolefincopolymeren (COC) liegt bevorzugt im Bereich von 70 bis 270 °C, und mindestens eine Folienoberfläche (Deckschicht) weist einen Glanzwert (Meßwinkel 20°) von größer 100 auf.

Ein hoher Oberflächenglanz bedeutet, dass der Glanz bei > 100 (DIN 67530 bei einem Meßwinkel von 20°), vorzugsweise bei > 120 und insbesondere bei > 130 liegt.

Unter einer weißen Polyesterfolie im Sinne der vorliegenden Erfindung wird eine Folie verstanden, die einen Weißgrad von mehr als 70 %, bevorzugt von mehr als 75 % und besonders bevorzugt von mehr als 80 %, aufweist. Des Weiteren beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie sollte der Anteil an dem Cycloolefincopolymeren (COC) in der Basisschicht größer als 2 % sein. Ist der Cycloolefincopolymer (COC)-Gehalt andererseits größer als 60 %, so besteht die Gefahr, dass sich die Folie nicht mehr wirtschaftlich herstellen läßt, da sie unter Umständen nicht mehr verfahrenssicher verstreckt werden kann.

Weiterhin ist bevorzugt, dass die Glasübergangstemperatur des eingesetzten Cycloolefincopolymeren (COC) größer als 70 °C ist. Andernfalls (bei einer Glasübergangstemperatur von kleiner als 70 °C) ist das Rohstoffgemisch unter Umständen schlechter verarbeitbar (schlechter extrudierbar), der gewünschte Weißgrad wird unter Umständen nicht mehr erreicht und das eingesetzte Regenerat führt zu einer Folie, die eine erhöhte Gelbfärbung aufweisen kann. Ist andererseits die Glasübergangstemperatur des ausgewählten Cycloolefincopolymeren (COC) größer als 270 °C, so wird sich die Rohstoffmischung unter Umständen im Extruder nicht mehr ausreichend homogen dispergieren lassen. Dies hätte dann eine Folie mit inhomogenen Eigenschaften zur Folge.

In der bevorzugten Ausführungsform der erfindungsgemäßen Folie liegt die Glasübergangstemperatur der verwendeten COCs in einem Bereich von 90 bis 250 °C und in der besonders bevorzugten Ausführungsform in einem Bereich von 110 bis 220 °C.

Überraschenderweise wurde gefunden, dass durch den Zusatz eines Cycloolefincopolymeren (COC) in der vorstehend beschriebenen Weise eine weiße, opake, glänzende Folie hergestellt werden kann.

Entsprechend der Menge und der Art des zugegebenen Cycloolefincopolymeren (COC) kann der Weißgrad und die Opazität der Folie exakt eingestellt und den jeweiligen Anforderungen angepasst werden. Durch diese Maßnahme ist es möglich, auf andere gängige weiß- und opakmachende Additive weitgehend zu verzichten. Weiterhin war es sehr überraschend, dass die Oberflächenrauigkeit der Folie wesentlich geringer und damit der Glanz der Folie wesentlich höher ist, als bei vergleichbaren Folien nach dem Stand der Technik. Vollkommen überraschend war darüber hinaus der zusätzliche Effekt, dass das Regenerat nicht, wie die polymeren Additive nach dem Stand der Technik, zur Gelbfärbung neigt.

Alle diese beschriebenen Merkmale waren nicht vorhersehbar. Dies umso mehr, da z.B. COCs zwar zum bevorzugten Polyester Polyethylenterephthalat weitgehend inkompatibel sind, bekanntlich aber mit ähnlichen Streckverhältnissen und Strecktemperaturen orientiert werden, wie Polyethylenterephthalat. Unter diesen Voraussetzungen hätte der Fachmann erwartet, dass bei den erfindungsgemäßen Herstellbedingungen keine weiße, opake Folie mit hohem Glanz produziert werden kann.

Insbesondere in den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität in Kombination mit einem hohen Oberflächenglanz auf mindestens einer Folienoberfläche aus, wobei die Farbänderung der Folie durch die Regeneratzugabe äußerst gering bleibt.

Die erfindungsgemäße Folie ist mehrschichtig. Mehrschichtige Ausführungsformen sind mindestens zweischichtig und umfassen immer die COC-haltige Basisschicht und zumindest eine weitere Deckschicht. In einer bevorzugten Ausführungsform bildet die COC-haltige Schicht die Basisschicht der Folie mit mindestens einer, vorzugsweise

mit beidseitigen Deckschichten, wobei gegebenenfalls einseitig oder beidseitig Zwischenschichten vorhanden sein können. Der Schichtaufbau der Folie ist dann z.B. A-B-C, wobei B die Basisschicht und A und C die Deckschichten sind, die gleich oder verschieden sein können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht beidseitig COC-haltige Zwischenschichten. In einer weiteren Ausführungsform kann die COC-haltige Schicht zusätzlich zur Basisschicht, einseitig eine Deckschicht auf der Basis- oder Zwischenschicht bilden. Die Basisschicht ist im Sinne der vorliegenden Erfindung diejenige Schicht, welche bevorzugt 50 % bis 99,5 %, insbesondere 60 bis 95 %, der Gesamtfoliendicke ausmacht. Die Deckschichten sind die Schichten, welche die äußeren Schichten der Folie bilden.

Die COC-haltige Basisschicht der erfindungsgemäßen Folie enthält einen thermoplastischen Polyester, vorzugsweise ein Polyesterhomopolymeres, ein COC sowie gegebenenfalls weitere zugesetzte Additive in jeweils wirksamen Mengen. Im allgemeinen enthält diese Schicht bevorzugt mindestens 20 Gew.-% bis 98 Gew.%, vorzugsweise 40 bis 98 Gew. -%, insbesondere 70 bis 98 Gew. -%, an thermoplastischen Polyester, bezogen auf das Gewicht der Schicht.

Geeignete thermoplastische Polyesterfür die Basisschicht sind bevorzugt Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch z.B. in der Schicht A (A=Deckschicht 1) und/oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4-oder -1,6-dicarbonsäure), Biphenyl-x,x'-dicarbonsäuren (insbesondere Biphenyl-4,4'-dicarbonsäure), Diphenylacetyten-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der erfindungsgemäßen zu verwendenden Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält/enthalten die COC-haltige Schicht/en ein Cycloolefincopolymeres (COC) in einer Menge von bevorzugt minimal 2,0 Gew.-%, insbesondere 4 bis 50 Gew.-% und besonders bevorzugt 6 bis 40 Gew.-%, bezogen auf das Gewicht der mit COC ausgerüsteten Schicht. Es ist sehr vorteilhaft für die vorliegende Erfindung, wenn das verwendete Cycloolefincopolymere (COC) mit dem thermoplastischen Polyester, z.B. Polyethylenterephthalat nicht verträglich ist und mit diesem keine homogene Mischung bildet.

Cycloolefinpolymere sind allgemein Homopolymerisate oder Copolymerisate, welche polymerisierte Cycloolefineinheiten und gegebenenfalls acyclische Olefine als Comonomer enthalten. Für die in der vorliegenden Erfindung eingesetzten COC sind besonders Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefinen der Formeln I, II, III, IV, V oder VI aufgebaut sind:

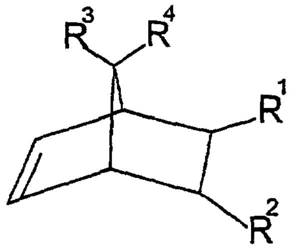

(I)

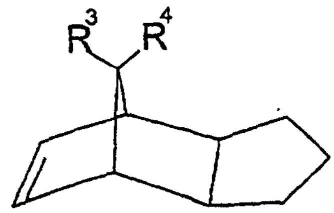

(II

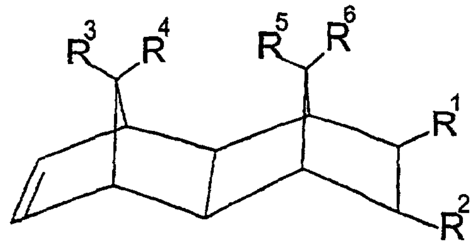

(III

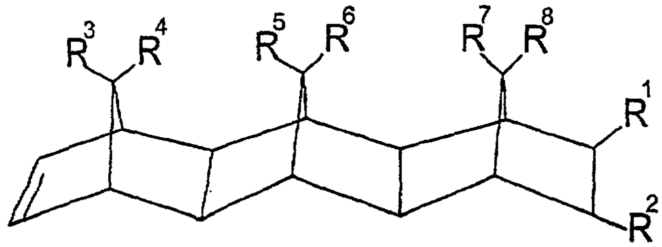

(IV

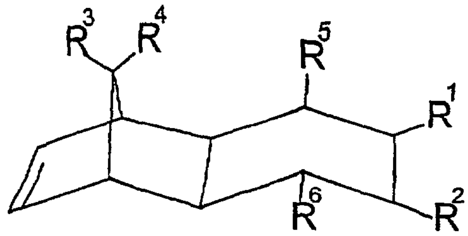

(V)

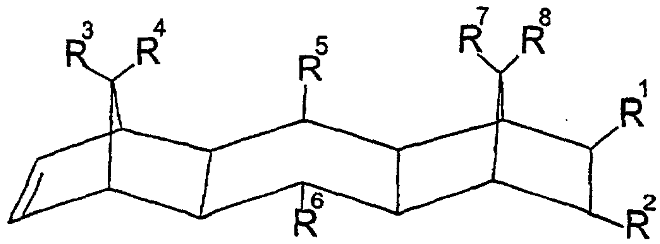

(VI

In diesen Formeln sind $R^1$, $R^2$, $R^3$, $R^4$, $R^5$, $R^6$, $R^7$ und $R^8$ unabhängig voneinander gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind bevorzugt lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die erfindungsgemäßen Cycloolefinpolymere 0 bis 45 Gew.-%, bezogen auf die Gesamtmasse des Cycloolefinpolymeren, polymerisierte Einheiten mindestens eines monocyclischen Olefins der Formel VII enthalten:

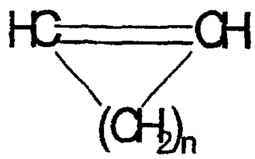

(VII

Hierin ist n eine Zahl von 2 bis 10.

Gegebenenfalls können die Cycloolefinpolymere 0 bis 99 Gew.-%, bezogen auf die Gesamtmasse des Cycloolefinpolymeren, polymerisierte Einheiten eines acyclischen Olefins der Formel VIII enthalten:

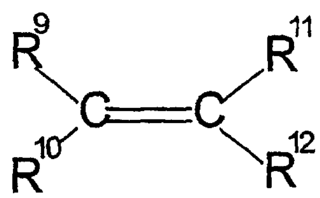

(VIII

Hierin sind $R^9$, $R^{10}$, $R^{11}$, und $R^{12}$ unabhängig voneinander gleich oder verschieden und bedeuten ein Wasserstoffatom oder $C_1$-$C_{10}$-Kohlenwasserstoffrest, bevorzugt einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I-VI aufgebaut Diese Cycloolefin-Polymere sind für die Zwecke der vorliegenden Erfindung weniger geeignet. Für die Zwecke der vorliegenden Erfindung sind insbesondere Cycloolefincopolymerisate (COC) geeignet, welche mindestens ein Cycloolefin der Formeln I bis VI und mindestens ein Comonomer enthalten. Bevorzugte Comonomere sind die acyclischen Olefine der Formel VIII. Im vorstehenden wie im nachfolgenden werden die erfindungsgemäß verwendbaren Cycloolefincopolymerisate COC genannt. Dabei sind als acyclische Olefine VIII solche bevorzugt, die 2 bis 20 C-Atome aufweisen, insbesondere unverzweigte acyclische Olefine mit 2 bis 10 C-Atomen wie beispielsweise Ethen, Propen und/oder Buten. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen Cycloolefincopolymers.

Unter den Cycloolefincopolymeren sind insbesondere diejenigen bevorzugt, die polymerisierte Einheiten polycyclischer Olefine mit Norbornengrundstruktur, besonders bevorzugt Norbornen, 5-Methyl-Norbornen oder Tetracyclododecen, enthalten. Geeignete Monomere sind weiterhin Dimethyloctahydronaphthalin und Cyclopenten. Besonders bevorzugt sind auch Cycloolefincopolymere (COC), die polymerisierte Einheiten acyclischer Olefine, insbesondere Ethylen, enthalten. Wiederum besonders bevorzugt sind Norbomen/Ethylen- und Tetracyclododecen/Ethylen-Copolymere, welche 5 bis 80 Gew.-%, vorzugsweise 10 bis 60 Gew.-% an acyclischem Olefin enthalten (bezogen auf das Gewicht des Copolymeren).

Die beschriebenen Cycloolefinpolymeren weisen im allgemeinen Glasübergangstemperaturen zwischen -20 °C und 400 °C auf. Für die Erfindung sind bevorzugt Cycloolefincopolymerisate (COC) verwendbar, die eine Glasübergangstemperatur von größer als 70 °C, vorzugsweise größer als 90 °C und insbesondere größer als 110 °C aufweisen. Die Viskositätszahl (Dekalin, 135 °C, DIN 53 728) liegt zweckmäßiger weise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in oben genannten Schriften beschriebenen Herstellungsverfahren von Cycloolefinpolymeren wird hiermit ausdrücklich Bezug genommen.

Die Cycloolefincopolymere werden entweder als reines Granulat oder als granuliertes Konzentrat (Masterbatch) in die Folie eingearbeitet, indem das Polyestergranulat oder -pulver mit dem Cycloolefincopolymer (COC) bzw. dem Cycloolefincopolymer (COC)-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur $T_g$ des Cycloolefincopolymeren (COC) liegt, im allgemeinen mindestens 5°C, vorzugsweise 10 bis 180 °C, insbesondere 15 bis 150 °C, über der Glasübergangstemperatur des Cycloolefincopolymeren (COC).

Für die Zwischenschichten und Deckschichten können prinzipiell die gleichen Polymere verwendet werden wie für die Basisschicht. Bevorzugt können die Deckschichten und ggf. die Zwischenschichten aus einem Gemisch von Polymeren, einem Copolymeren oder einem Homopolymeren bestehen, welche Ethylen-2,6-naphthalat-Einheiten und/oder Ethylen-terephthalat-Einheiten enthalten. Bis zu 30 mol-% der Polymere können aus weiteren Comonomeren (z.B. Ethylenisophthalat-Einheiten) bestehen.

Bevorzugt ist, dass mindestens eine Deckschicht nicht mit Cycloolefincopolymer (COC) ausgerüstet ist. Diese Deckschicht enthält im wesentlichen die genannten thermoplastischen Polyester und ist ggf. mit Antiblock- und/oder Gleitmitteln ausgerüstet.

Die Basisschicht und die anderen Schichten können zusätzlich übliche Additive, wie z.B. Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung geeigneter Antiblockmittel findet sich beispielsweise in der EP-A-0 602 964.

Geeignete Gleitmittel sind z.B. Polydimethylsiloxan, Carbonsäuren, Metallsalze von Carbonsäuren, Carbonsäureamide, Carbonsäureester. Eine detaillierte Beschreibung findet sich beispielsweise in Kunststoff-Additive, 2. Ausgabe, Carl Hanser Verlag München Wien S. 309 bis 347.

Zu Verbesserung des Weißgrades der Folie kann die Basisschicht und/oder ggf. eine andere zusätzliche Schicht eine weitere Pigmentierung enthalten. Hierbei hat es sich als besonders günstig erwiesen, als zusätzliche Additive Bariumsulfat in einer Korngröße von bevorzugt 0,3-0,8 µm, insbesondere 0,4-0,7 µm oder Titandioxid in einer Korngröße von bevorzugt 0,05-0,3 µm, auszuwählen. Die Folie erhält hierdurch ein brillantes, weißes Aussehen. Die Partikelkonzentration an Bariumsulfat bzw. Titandioxid liegt bevorzugt bei 1 bis 25 Gew.-%, vorzugsweise bei 1 bis 20 Gew.-%, und ganz bevorzugt bei 1 bis 15 Gew.-%, bezogen auf das Gewicht der damit ausgerüsteten Schicht.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 500 µm, wobei 8 bis 300 µm, insbesondere 10 bis 300 µm, besonders bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 µm, insbesondere 0,2 bis 5 µm, vorzugsweise 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem an sich bekanntem Koextrusionsverfahren.

Im Rahmen dieses Verfahrens wird so vorgegangen, dass die den einzelnen Schichten der Folie entsprechenden Schmelzen durch eine Flachdüse koextrudiert werden, die so erhaltene Folie zur Verfestigung auf einer oder mehreren Walzen abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufender Walzen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Zur Einstellung weiterer gewünschter Eigenschaften kann die Folie sowohl chemisch behandelt werden als auch corona- bzw. flammbehandelt sein. Die Behandlungsintensität sollte so gewählt werden, dass die Oberflächenspannung der Folie im allgemeinen über 45 mN/m liegt

Ebenso kann zur Einstellung weiterer Eigenschaften die Folie beschichtet werden. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäßen Folie drückt sich durch einen hohen Weißgrad, durch eine hohe Opazität in Kombination mit mindestens einer hochglänzenden Oberfläche aus. Der Weißgrad der Folie beträgt mehr als 70 %, bevorzugt mehr als 75 % und besonders bevorzugt mehr als 80 %. Die Opazität der erfindungsgemäßen Folie beträgt mehr als 55 %, bevorzugt mehr als 60 % und besonders bevorzugt mehr als 65 %. Der Glanz der erfindungsgemäßen Folie beträgt mindestens einseitig mehr als 100, bevorzugt mehr als 120 und besonders bevorzugt mehr als 130 bei einem Meßwinkel von 20° (DIN 67530).

Ein weiterer Vorteil der Erfindung liegt darin, dass das bei der Herstellung der Folie immanent anfallende Regenerat in einer Konzentration von 10 bis 70 Gew.-%, bezogen auf das Gesamtgewicht der Folie, wieder verwendet werden kann, ohne dass dabei die physikalischen Eigenschaften der Folie nennenswert negativ beeinflusst werden. Insbesondere wird durch das Regenerat (im wesentlichen aus Polyesterrohstoff und Cycloolefincopolymeren (COC) bestehend) die Folie nicht undefiniert in der Farbe verändert, was bei den Folien nach dem Stand der Technik der Fall ist. Bevorzugt ist, dass die hochglänzende Deckschicht regeneratfrei bleibt.

Darüber hinaus besteht ein weiterer Vorteil der Erfindung darin, dass die Herstellungskosten der erfindungsgemäßen Folie vergleichbar sind mit herkömmlichen transparenten Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich sehr gut für Innenraumverkleidungen, für Messebau und Messeartikel, für Schutzverkleidungen von Maschinen und Fahrzeugen sowie zur Verpackung von licht- und/oder luftempfindlichen Nahrungs- und Genussmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen.

Das Verarbeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragenden Planlage und einem niedrigen Reibungskoeffizienten entscheidend durch die Rauigkeit der Folie beeinflusst. Es hat sich herausgestellt, dass die Wickelung der erfindungsgemäßen Folie insbesondere dann gut ist, wenn unter Einbehalt der anderen Eigenschaften die mittlere Rauigkeit in einem Bereich von 50 bis 250 nm liegt. Die Rauigkeit lässt sich u.a. durch Variation der COC-Konzentration, der Deckschichtdicke, ggf. der Deckschichtrezeptur, und den Verfahrensparametem beim Herstellungsprozess im angegebenen Bereich variieren.

Die nachstehende Tabelle (Tabelle 1) fasst die wichtigsten erfindungsgemäßen Folieneigenschaften noch einmal zusammen.

**Tabelle 1**

| | Erfindungsgemäßer Bereich | bevorzugt | besonders bevorzugt | Einheit | Messmethode |
|---|---|---|---|---|---|
| Formulierung | | | | | |
| Konzentration des Cycloolefincopolymeren (COC) in der Basisschicht, und/oder Zwischenschichten, und/oder einer Deckschicht | 2-60 | 4-50 | 6-40 | Gew.-% | |
| Glasübergangstemperaturen des Cycloolefincopolymeren (COC) | 70-270 | 90-250 | 110-220 | °C | DIN 73 765 |
| Folieneigenschaften | | | | | |
| Weißgrad | > 70 | > 75 | > 80 | % | Berger |
| Opazität | > 55 | > 60 | > 65 | % | DIN 53 146 |
| COF | < 0,6 | < 0,55 | < 0,5 | | DIN 53 375 |
| Oberflächenglanz mindestens einseitig | > 100 | > 120 | > 130 | | DIN 67 530 (Meßwinkel 20°) |
| *Mittlere Rauhigkeit* $R_a$ | 50-300 | 60-250 | 70-200 | nm | DIN 4768, Cut-off von 0,25 mm |

Zur Charakterisierung der Rohstoffe und der Folien wurden die folgenden Meßwerte benutzt:

DIN = Deutsches Institut für Normung
ISO = International Organization for Standardisation
ASTM = American Society for Testing and Materials

SV-Wert (standard viscosity)

Die Standardviskosität SV (DCE) wird, angelehnt an DIN 53726, in Dichloressigsäure gemessen.

Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Rauigkeit**

Die Rauigkeit $R_a$ der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53146 bestimmt. Der Weißgrad wird als WG = RY + 3RZ - 3RX definiert.

WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

**Lichtdurchlässigkeit**

Die Lichtdurchlässigkeit wird in Anlehnung an ASTM-D 1033-77 gemessen.

**Glanz**

Der Glanz wurde nach DIN 67 530 bei einem Meßwinkel von 20° bestimmt. Gemessen wurde der Reflektorwert als optische Kenngröße für die Oberfläche einer Folie. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muß mit dem Einstrahlwinkel angegeben werden.

**Glasübergangstemperatur**

Die Glasübergangstemperatur Tg wurde anhand von Folienproben mit Hilfe der DSC (Differential Scanning Calorimetry) bestimmt (DIN 73 765). Verwendet wurde das Gerät DSC 1090 der Fa. DuPont. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmigen Glasübergangs. Als Tg wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

Die nachfolgenden Beispiele dienen zu näheren Erläuterung der Erfindung: Es handelt sich um koextrudierte, mehrschichtige Folien.

**Beispiel 1**

Nach der Koextrusions-Technologie wird eine 23 µm dicke mehrschichtige Folie mit der Schichtreihenfolge A-B-A hergestellt, wobei B die Basisschicht und A die Deckschichten darstellen. Die Basisschicht B ist 21 µm dick und

die beiden Deckschichten, die die Basisschicht überziehen, sind jeweils 1 μm dick. Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus Cycloolefincopolymeren (COC) der Fa. Ticona: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur Tg von 170 °C ebenfalls dem Extruder für die Basisschicht B zugeführt. Der Anteil des Cycloolefincopolymeren (COC) an der Basisschicht betrug 10 Gew.-%.

Die 1 μm dicken Deckschichten enthalten 93 % Polyester (RT49, Fa. Kosa, Deutschland) sowie 7 % eines Masterbatches, dass neben Polyester 10.000 ppm Siliciumdioxid (®Sylobloc, Fa. Grace, Deutschland) enthält.

Es wurde durch Koextrusion und anschließende stufenweise Orientierung in Längs- und Querrichtung eine weiße, opake dreischichtige Folie einer Gesamtdicke von 23 μm hergestellt

Basisschicht B, Mischung aus:

| | |
|---|---|
| 90,0 Gew.-% | Polyethylenterephthalat-Homopolymer (RT49, Fa. Kosa, Deutschland) |
| 10,0 Gew.-% | Cycloolefincopolymeren (COC) der Fa. Ticona, ®Topas 6015, Deutschland |

Die Herstellungsbedingungen in den einzelnen Verfahrensschritten waren:

| | | |
|---|---|---|
| Extrusion | Temperaturen der Basis- und der Deckschicht | 280 °C |
| | Temperatur der Abzugswalze | 30 °C |
| Längsstreckung | Temperatur | 80 - 125 °C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| Dauer | | 3 s |

Die Folie hatte die geforderten guten Eigenschaften und zeigt das gewünschte Handling und das gewünschte Verarbeitungsverhalten. Die erzielten Eigenschaften derart hergestellter Folien sind in der Tabelle 2 zusammengefasst

**Beispiel 2**

Im Vergleich zu Beispiel 1 wurde jetzt in die Basisschicht 50 Gew.-% Regenerat dazugegeben. Die Konzentration des Cycloolefincopolymeren (COC) in der damit hergestellten Folie betrug wiederum 10 Gew.-%. Die Verfahrensparameter wurden im Vergleich zu Beispiel 1 nicht geändert. Es wurde die Gelbverfärbung der Folie visuell beobachtet. Anhand der Tabelle 2 erkennt man, dass kaum eine Gelbverfärbung der Folie sichtbar geworden ist.

Basisschicht B, Mischung aus:

| | |
|---|---|
| 45,0 Gew.-% | Polyethylenterephthalat-Homopolymer (RT49, Kosa, Deutschland) |
| 50,0 Gew.-% | Regenerat (90 Gew.-% Polyester + 10 Gew.-% Topas 6015) |
| 5,0 Gew.-% | Cycloolefincopolymeren (COC) der Fa. Ticona, ®Topas 6015 |

Deckschichten: Wie in Beispiel 1.

**Beispiel 3**

Im Vergleich zu Beispiel 1 wurde jetzt eine ABA-Folie mit einer Dicke von 96 μm hergestellt, wobei die 92 μm dicke Basisschicht von den je 2 μm dicken Deckschichten überzogen wird. Die Konzentration des Cycloolefincopolymeren (COC) in der Basisschicht betrug 8 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, dass keine

Gelbverfärbung der Folie sichtbar geworden ist.

Basisschicht B (92 µm), Mischung aus:

| | |
|---|---|
| 92,0 Gew.-% | Polyethylenterephthalat-Homopolymer (RT49, Kosa, Deutschland) |
| 8,0 Gew.-% | Cycloolefincopolymeren (COC) der Fa. Ticona, ®Topas 6015 |

Deckschichten: Wie in Beispiel 1. Die Dicke der Deckschichten liegt jedoch bei 2 µm.

**Beispiel 4**

Im Vergleich zu Beispiel 3 wurde jetzt in die Basis 50 Gew.-% Regenerat dazugegeben. Die Konzentration des Cycloolefincopolymeren (COC) in der Basisschicht betrug wiederum 8 Gew.-%. Die Verfahrensparameter wurden im Vergleich zu Beispiel 1 nicht geändert. Es wurde die Gelbverfärbung der Folie visuell beobachtet. Anhand der Tabelle 2 erkennt man, dass kaum eine Gelbverfärbung der Folie sichtbar geworden ist.

Basisschicht B, Mischung aus:

| | |
|---|---|
| 47,0 Gew.-% | Polyethylenterephthalat-Homopolymer (RT49, Kosa, Deutschland) |
| 50,0 Gew.-% | Eigenregenerat (90 Gew.-% Polyester + 10 Gew.-% Topas 6015) |
| 3,0 Gew.-% | Cycloolefincopolymeren (COC) der Fa. Ticona, ®Topas 6015 |

Deckschichten: Wie in Beispiel 3.

**Vergleichsbeispiel 1**

Es wurde Beispiel 1 aus der DE-A 2 353 347 nachgearbeitet. In Abänderung des Beispiels wurden zusätzlich 50 Gew.-% Regenerat mitverarbeitet. Tabelle 2 zeigt, dass eine deutliche Gelbverfärbung der Folie sichtbar geworden ist. Außerdem ist die Rauigkeit der Folie für viele Anwendungen zu hoch und der Glanz für viel Anwendungen zu niedrig.

Basisschicht B, Mischung aus:

| | |
|---|---|
| 47,5 Gew.-% | Polyethylenterephthalat-Homopolymer (RT49, Kosa, Deutschland) |
| 50,0 Gew.-% | Eigenregenerat (95 Gew.-% Polyester + 5 Gew.-% Polypropylen) |
| 2,5 Gew.-% | Polypropylen |

**Vergleichsbeispiel 2**

Es wurde Beispiel 1 aus der EP-A 0 300 060 nachgearbeitet. In Abänderung des Beispiels wurden zusätzlich 50 Gew.-% Regenerat mitverarbeitet. Tabelle 2 zeigt, dass eine deutliche Gelbverfärbung der Folie sichtbar geworden ist. Außerdem ist die Rauigkeit der Folie für viele Anwendungen zu hoch und der Glanz für viele Anwendungen zu niedrig.

Basisschicht B, Mischung aus:

| | |
|---|---|
| 45,0 Gew.-% | Polyethylenterephthalat-Homopolymer (RT49, Kosa, Deutschland) |
| 50,0 Gew.-% | Eigenregenerat (95 Gew.-% Polyester + 5 Gew.-% Polypropylen) |
| 5,0 Gew.-% | Polypropylen |

**Vergleichsbeispiel 3**

Es wurde Beispiel 1 aus der EP-A 0 360 201 nachgearbeitet. In Abänderung des Beispiels wurden zusätzlich 50 Gew.-% Regenerat mitverarbeitet. Tabelle 2 zeigt, dass eine deutliche Gelbverfärbung der Folie sichtbar geworden ist. Außerdem ist die Rauigkeit der Folie für viele Anwendungen zu hoch und der Glanz für viel Anwendungen zu niedrig.

Basisschicht B, Mischung aus:

| | |
|---|---|
| 40,0 Gew.-% | Polyethylenterephthalat-Homopolymer (RT49, Kosa, Deutschland) |
| 50,0 Gew.-% | Eigenregenerat (95 Gew.-% Polyester + 5 Gew.-% Polypropylen) |
| 10,0 Gew.-% | Polypropylen |

**Vergleichsbeispiel 4**

Es wurde Beispiel 1 aus der DE-A 195 40 277 nachgearbeitet. In Abänderung des Beispiels wurden zusätzlich 50 Gew.-% Regenerat mitverarbeitet. Tabelle 2 zeigt, dass eine deutliche Gelbverfärbung der Folie sichtbar geworden ist. Außerdem ist die Rauigkeit der Folie für viele Anwendungen zu hoch und der Glanz für viel Anwendungen zu niedrig.

Basisschicht B, Mischung aus:

| | |
|---|---|
| 43,5 Gew.-% | Polyethylenterephthalat-Homopolymer (RT49, Kosa, Deutschland) |
| 50,0 Gew.-% | Eigenregenerat (95 Gew.-% Polyester + 5 Gew.-% Polystyrol) |
| 6,5 Gew.-% | Polystyrol |

**Tabelle 2**

| Beispiel | Foliendicke | Schichtaufbau | Additiv zum Polyesterrohstoff | Glasübergangstemperatur | Weißgrad | Opazität | Beurteilung des Gelbgrades der Folie | Glanz (Meßwinkel 20°) | Reibung COF | Mittlere Rauhigkeit $R_a$ | |
|---|---|---|---|---|---|---|---|---|---|---|---|
| | | | | | | | | | Außenseite gegen Innenseite | Außen-seite | Innen-seite |
| | µm | | | °C | % | % | | | | nm | nm |
| B1 | 23 | ABA | COC | 170 | 75 | 75 | ++ | 180 | 0,49 | 45 | 48 |
| B2 | 23 | ABA | COC | 170 | 76 | 80 | + | 190 | 0,42 | 44 | 46 |
| B3 | 96 | ABA | COC | 170 | 85 | 85 | ++ | 195 | 0,32 | 39 | 40 |
| B4 | 96 | ABA | COC | 170 | 86 | 90 | + | 190 | 0,35 | 37 | 38 |
| VB1 | 155 | B | Polypropylen | -10 | 80 | 70 | - | 46 | 0,45 | 410 | 410 |
| VB2 | 100 | B | Polypropylen | -10 | 88 | 80 | - | 57 | 0,45 | 180 | 180 |
| VB3 | 100 | ABA | Polypropylen | -10 | 92 | 89 | - | 54 | 0,25 | 370 | 370 |
| VB4 | 125 | B | Polystyrol | 100 | 82 | 82 | - | 51 | 0,35 | 480 | 480 |

Zeichenerklärung für den Gelbgrad der produzierten Folien:
++ : keine Gelbfärbung ist zu erkennen
+ : geringe Gelbfärbung ist zu erkennen
- : deutliche Gelbfärbung ist zu erkennen
VB : Vergleichsbeispiel

**Patentansprüche**

1. Polyesterfolie, welche mindestens eine Basisschicht (B) und mindestens eine Deckschicht aufweist, **dadurch gekennzeichnet, dass** mindestens die Basisschicht neben einem thermoplastischen Polyester ein Cycloolefincopolymer (COC) enthält, wobei das COC aus mindestens einem Cycloolefin und mindestens einem Comonomer aufgebaut ist.

2. Polyesterfolie gemäß Anspruch 1, **dadurch gekennzeichnet, dass** sie einen Schichtaufbau A-B-C hat, wobei die Deckschichten A und C gleich oder verschieden sind und mindestens eine der Deckschichten kein COC enthält.

3. Polyesterfolie gemäß Anspruch 1 oder 2, **dadurch gekennzeichnet, dass** sie weitere Deck- und/oder Zwischenschichten aufweist.

4. Polyesterfolie gemäß einem oder mehreren der Ansprüche 1 bis 3, **dadurch gekennzeichnet, dass** der thermoplastische Polyester Ethylenglykol- und Terephthalsäure-Einheiten oder Ethylenglykol- und Naphthalin-2,6-dicarbonsäure-Einheiten enthält.

5. Polyesterfolie gemäß einem oder mehreren der Ansprüche 1 bis 4, **dadurch gekennzeichnet, dass** es sich bei dem thermoplastischen Polyester um Polyethylenterephthalat handelt.

6. Polyesteriolie gemäß einem oder mehreren der Ansprüche 1 bis 5, **dadurch gekennzeichnet, dass** die mit dem COC ausgerüsteten Schichten das COC von 2 bis 60 Gew.- %, bevorzugt von 4 bis 50 Gew.-%, insbesondere von 6 bis 40 Gew.-%, jeweils bezogen auf das Gewicht der damit ausgerüsteten Schichten, enthalten.

7. Polyesterfolie gemäß einem oder mehreren der Ansprüche 1 bis 6, **dadurch gekennzeichnet, dass** das COC Einheiten aus Norbornen, Tetracyclododecen, Dimethyloctahydronaphthalin, Cyclopenten oder 5-Methylnorbornen enthält.

8. Polyesterfolie gemäß einem oder mehreren der Ansprüche 1 bis 7, **dadurch gekennzeichnet, dass** das COC als Comonomer Ethylen, Propylen und/oder Butylen, bevorzugt Ethylen, enthält.

9. Polyesterfolie gemäß einem oder mehreren der Ansprüche 1 bis 8, **dadurch gekennzeichnet, dass** das COC ein Norbornen/Ethylen oder ein Tetracyclododecen/Ethylen-Copolymerisat ist.

10. Polyesterfolie gemäß einem oder mehreren der Ansprüche 1 bis 9, **dadurch gekennzeichnet, dass** das COC eine Glasübergangstemperatur von 70 bis 270°C, bevorzugt 90 bis 250°C, insbesondere von 110 bis 220°C, aufweist.

11. Polyesterfolie gemäß einem oder mehreren der Ansprüche 1 bis 10, **dadurch gekennzeichnet, dass** die Folie einen Weißgrad von größer 70%, bevorzugt größer 75%, insbesondere größer 80%, aufweist.

12. Polyesterfolie gemäß einem oder mehreren der Ansprüche 1 bis 11, **dadurch gekennzeichnet, dass** die Folie eine Opazität von größer 55%, bevorzugt größer 60%, insbesondere größer 65%, aufweist.

13. Polyesterfolie gemäß einem oder mehreren der Ansprüche 1 bis 12, **dadurch gekennzeichnet, dass** die Folie zumindest einseitig einen Oberflächenglanz von größer 100, bevorzugt größer 120, insbesondere von größer 130, aufweist.

14. Polyesterfolie gemäß einem oder mehreren der Ansprüche 1 bis 13, **dadurch gekennzeichnet, dass** die Folie zusätzlich übliche Additive wie Antiblockmittel, Pigmente, Stabilisatoren oder Gleitmittel enthält.

15. Verfahren zur Herstellung einer Polyesterfolie gemäß einem oder mehreren der Ansprüche 1 bis 14, **dadurch gekennzeichnet, dass** man die für die Herstellung der Basis- und Deckschichten und gegebenenfalls Zwischenschichten erforderlichen Ausgangsstoffe über Extruder durch eine Flachdüse koextrudiert und die erhaltene Folie biaxial verstreckt und thermofixiert und gegebenenfalls weiterbehandelt.

16. Verwendung einer Polyesterfolie gemäß einem oder mehreren der Ansprüche 1 bis 14 zur Herstellung von Formkörpern.

17. Formkörper hergestellt unter Verwendung einer Polyesterfolie gamäß einem oder mehreren der Ansprüche 1 bis 14.

## Claims

1. A polyester film which has at least one base layer (B) and at least one outer layer, wherein at least the base layer comprises, besides a thermoplastic polyester, a cycloolefin copolymer (COC), where the COC is composed of at least one cycloolefin and at least one comonomer.

2. The polyester film as claimed in claim 1, which has an A-B-C layer structure, where the outer layers A and C are identical or different, and in at least one of the outer layers no COC is present.

3. The polyester film as claimed in claim 1 or 2, which has further outer layers and/or intermediate layers.

4. The polyester film as claimed in one or more of claims 1 to 3, wherein the thermoplastic polyester contains ethylene glycol units and terephthalic acid units, or ethylene glycol units and naphthalene-2,6-dicarboxylic acid units.

5. The polyester film as claimed in one or more of claims 1 to 4, wherein the thermoplastic polyester is polyethylene terephthalate.

6. The polyester film as claimed in one or more of claims 1 to 5, wherein the layers provided with the COC comprise from 2 to 60% by weight, preferably from 4 to 50% by weight, in particular from 6 to 40% by weight, of the COC, based in each case on the weight of the layers provided with the same.

7. The polyester film as claimed in one or more of claims 1 to 6, wherein the COC conains units of norbornene, tetracyclododecene, dimethyloctahydronaphthalene, cyclopentene or 5-methylnorbornene.

8. The polyester film as claimed in one or more of claims 1 to 7, wherein the COC contains, as comonomer, ethylene, propylene, and/or butylene, preferably ethylene.

9. The polyester film as claimed in one or more of claims 1 to 8, wherein the COC is a norbornene-ethylene or tetracyclododecene-ethylene copolymer.

10. The polyester film as claimed in one or more of claims 1 to 9, wherein the COC has a glass transition temperature of from 70 to 270°C, preferably from 90 to 250°C, in particular from 110 to 220°C.

11. The polyester film as claimed in one or more of claims 1 to 10, which has a whiteness above 70%, preferably above 75%, in particular above 80%.

12. The polyester film as claimed in one or more of claims 1 to 11, which has an opacity above 55%, preferably above 60%, in particular above 65%.

13. The polyester film as claimed in one or more of claims 1 to 12, which, at least on one side, has a surface gloss above 100, preferably above 120, in particular above 130.

14. The polyester film as claimed in one or more of claims 1 to 13, which also comprises conventional additives, such as antiblocking agents, pigments, stabilizers or lubricants.

15. A process for producing the polyester film as claimed in one or more of claims 1 to 14, which comprises using an extruder with a flat-film die to coextrude the starting materials required for producing the base and outer layers and any intermediate layers present, and biaxially orienting and heat-setting and, if desired, further treating the resultant film.

16. The use of the polyester film as claimed in one or more of claims 1 to 14, for producing moldings.

17. A molding produced using the polyester film as claimed in one or more of claims 1 to 14.

## Revendications

1. Feuille polyester, laquelle comprend au moins une couche de base (B) et au moins une couche de finition, **caractérisée en ce qu'**au moins la couche de base contient en plus d'un polyester thermoplastique un copolymère cyclooléfine (COC), le COC se composant d'au moins une cyclooléfine et d'au moins un comonomère.

2. Feuille polyester selon la revendication 1, **caractérisée en ce qu'**elle présente une structure en couche A-B-C, les couches de finition A et C étant identiques ou différentes et au moins une des couches de finition ne contenant pas de COC.

3. Feuille polyester selon la revendication 1 ou 2, **caractérisée en ce qu'**elle comprend d'autres couches de finition et/ou intermédiaires.

4. Feuille polyester selon l'une ou plusieurs des revendications 1 à 3, **caractérisée en ce que** le polyester thermoplastique contient des unités éthylèneglycol et acide téréphtalique ou des unités éthylèneglycol et acide naphtalène-2,6-dicarboxylique.

5. Feuille polyester selon l'une ou plusieurs des revendications 1 à 4, **caractérisée en ce qu'**il s'agit pour le polyester thermoplastique de polyéthylène-téréphtalate.

6. Feuille polyester selon l'une ou plusieurs des revendications 1 à 5, **caractérisée en ce que** les couches pourvues de COC contiennent du COC de 2 à 60 % en poids, de préférence de 4 à 50 % en poids, en particulier de 6 à 40 % en poids, respectivement rapporté au poids des couches pourvues avec du COC .

7. Feuille polyester selon l'une ou plusieurs des revendications 1 à 6, **caractérisée en ce que** les unités COC contiennent du norbomène, du tétracyclododécène, du diméthyloctahydronaphtalène, du cyclopentène ou du 5-méthylnorbornène.

8. Feuille polyester selon l'une ou plusieurs des revendications 1 à 7, **caractérisée en ce que** le COC contient comme monomère de l'éthylène, du propylène, et/ou du butylène, de préférence de l'éthylène.

9. Feuille polyester selon l'une ou plusieurs des revendications 1 à 8, **caractérisée en ce que** le COC est un copolymérisat norbomène/éthylène ou tétracyclododécène/éthylène.

10. Feuille polyester selon l'une ou plusieurs des revendications 1 à 9, **caractérisée en ce que** le COC présente une température de transition vitreuse de 70 à 270 °C, de préférence de 90 à 250 °C, en particulier de 110 à 220 °C.

11. Feuille polyester selon l'une ou plusieurs des revendications 1 à 10, **caractérisée en ce que** la feuille présente un degré de blancheur supérieur à 70 %, de préférence supérieur à 75 %, en particulier supérieur à 80 %.

12. Feuille polyester selon l'une ou plusieurs des revendications 1 à 11, **caractérisée en ce que** la feuille présente une opacité supérieure à 55 %, de préférence supérieure à 60 %, en particulier supérieure à 65 %.

13. Feuille polyester selon l'une ou plusieurs des revendications 1 à 12, **caractérisée en ce que** la feuille présente au moins sur un côté une brillance de surface supérieure à 100, de préférence supérieure à 120, en particulier supérieure à 130.

14. Feuille polyester selon l'une ou plusieurs des revendications 1 à 13, **caractérisée en ce que** la feuille contient en plus des additifs habituels comme des agents antiagglomérants, des pigments, des stabilisateurs et des lubrifiants.

15. Procédé pour la fabrication d'une feuille polyester selon l'une quelconque des revendications 1 à 14, **caractérisé en ce que** l'on coextrude les matières premières requises pour la fabrication des couches de base et de finition et le cas échéant des couches intermédiaires avec une extrudeuse par une buse plate et que la feuille obtenue est étirée biaxialement et thermofixée et le cas échéant traitée ultérieurement.

16. Utilisation d'une feuille polyester selon l'une ou plusieurs des revendications 1 à 14 pour la fabrication de corps mis en forme.

**17.** Corps mis en forme fabriqués en utilisant une feuille de polyester selon l'une quelconque des revendications 1 à 14.